(19) Europäisches Patentamt / European Patent Office / Office européen des brevets

(11) **EP 4 779 704 A1**

(12) **EUROPEAN PATENT APPLICATION**
published in accordance with Art. 153(4) EPC

(43) Date of publication:
**22.07.2026 Bulletin 2026/30**

(21) Application number: **25867241.9**

(22) Date of filing: **27.10.2025**

(51) International Patent Classification (IPC):
$H01M\ 4/133^{(2010.01)}$    $H01M\ 4/134^{(2010.01)}$
$H01M\ 4/36^{(2006.01)}$    $H01M\ 4/587^{(2010.01)}$
$H01M\ 4/38^{(2006.01)}$    $H01M\ 4/48^{(2010.01)}$
$H01M\ 4/02^{(2006.01)}$

(52) Cooperative Patent Classification (CPC):
H01M 4/02; H01M 4/133; H01M 4/134; H01M 4/36;
H01M 4/38; H01M 4/48; H01M 4/587; Y02E 60/10

(86) International application number:
**PCT/KR2025/017184**

(87) International publication number:
**WO 2026/111216 (28.05.2026 Gazette 2026/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.11.2024 KR 20240165728**
         **24.10.2025 KR 20250156120**

(71) Applicant: **LG ENERGY SOLUTION, LTD.**
**Seoul 07335 (KR)**

(72) Inventors:
- JUN, Hyun Min
  **Daejeon 34122 (KR)**
- WOO, Sang Wook
  **Daejeon 34122 (KR)**
- LEE, Chang Ju
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE AND LITHIUM SECONDARY BATTERY COMPRISING SAME**

(57) The present invention relates to a negative electrode, and a lithium secondary battery including the same. Specifically, the negative electrode is characterized in that it includes a current collector; and a negative electrode active material layer disposed on at least one surface of the current collector, wherein the negative electrode active material layer includes a carbon-based active material and a silicon-based active material, the carbon-based active material includes artificial graphite particles in a form of a secondary particle in which a plurality of primary particles are aggregated, the primary particles have a circularity of 0.60 to 0.78, and a ratio of an average particle diameter ($D_{50}$) of the silicon-based active material to an average particle diameter ($D_{50}$) of the artificial graphite particles in the form of a secondary particle is in a range of 0.4 to 1.

EP 4 779 704 A1

# EP 4 779 704 A1

## Description

### TECHNICAL FIELD

The present invention relates to a negative electrode, and a lithium secondary battery including the same.

### BACKGROUND ART

In line with growing concerns about environmental issues, a significant amount of research into electric vehicles (EVs) and hybrid electric vehicles (HEVs), which may replace vehicles using fossil fuels, such as gasoline vehicle and diesel vehicle, one of major causes of air pollution, has been conducted. Lithium secondary batteries having high energy density, high discharge voltage, and high output stability have been mainly researched and used as power sources of these electric vehicles (EVs) and hybrid electric vehicles (HEVs).

In general, a lithium secondary battery is composed by including a positive electrode, a negative electrode, a separator, and an electrolyte, and the positive electrode or negative electrode is prepared by preparing a slurry by mixing a positive electrode active material or negative electrode active material with a binder and dispersing the mixture in a solvent, and forming an electrode active material layer by coating the slurry on a surface of an electrode collector and drying.

In this case, a carbon-based active material, which may reversibly intercalate and deintercalate lithium ions and maintains structural and electrical properties, may be used as the negative electrode active material. Various types of carbon-based materials, such as artificial graphite, natural graphite, and hard carbon, have been used as the carbon-based active material, and, among them, a graphite-based active material, which may guarantee life characteristics of the lithium secondary battery due to excellent reversibility, has been most widely used. Since the graphite-based active material has a low discharge voltage relative to lithium of - 0.2 V, a battery using the graphite-based active material may exhibit a high discharge voltage of 3.6 V, and thus, it provides many advantages in terms of energy density of the lithium battery.

Meanwhile, with the advancement of electric vehicles and mobile electronic devices, there have been attempts to improve rapid charging performance in order to meet consumer demands for convenience, efficiency, and economic efficiency, and efforts have been made to increase an amount of a carbon coating layer on the graphite-based active material and form secondary particles of artificial graphite, but there are problems such as a decrease in charge and discharge efficiency.

Accordingly, there is an urgent need to develop a negative electrode that may simultaneously improve rapid charging performance and charge and discharge efficiency.

### DISCLOSURE OF THE INVENTION

### TECHNICAL PROBLEM

An object of the present invention is to provide a negative electrode having improved cycle life and rapid charging performance while reducing battery resistance and preventing a decrease in discharge capacity by suppressing a side reaction with an electrolyte and a side reaction of a material itself by using a negative electrode active material that includes a carbon-based active material including artificial graphite particles in a form of a secondary particle in which a plurality of primary particles are aggregated and a silicon-based active material, and by designing circularity of the primary particles and a ratio of an average particle diameter of the silicon-based active material to an average particle diameter of the artificial graphite particles in the form of a secondary particle to have values within a specific range.

Another object of the present invention is to provide a lithium secondary battery including the above-described negative electrode.

### TECHNICAL SOLUTION

The present invention provides a negative electrode including a current collector; and a negative electrode active material layer disposed on at least one surface of the current collector, wherein the negative electrode active material layer includes a carbon-based active material and a silicon-based active material, the carbon-based active material includes artificial graphite particles in a form of a secondary particle in which a plurality of primary particles are aggregated, circularity of the primary particles is in a range of 0.60 to 0.78, and a ratio of an average particle diameter $(D_{50})$ of the silicon-based active material to an average particle diameter $(D_{50})$ of the artificial graphite particles in the form of a secondary particle is in a range of 0.4 to 1.

Also, the present invention provides a lithium secondary battery including the above-described negative electrode.

2

## ADVANTAGEOUS EFFECTS

A negative electrode according to the present invention employs a negative electrode active material that includes a carbon-based active material including artificial graphite in a form of a secondary particle in which a plurality of primary particles are aggregated and a silicon-based active material, wherein, in this case, circularity of the primary particles constituting the artificial graphite particle in the form of a secondary particle is controlled to satisfy a specific range. Specifically, since a shape of the primary particle is adjusted to be close to spherical, a side reaction with an electrolyte due to particle breakage and an increase in specific surface area after a rolling process during preparation of the negative electrode may be prevented and a stable film may be formed by securing a diffusion path for lithium ions.

Also, since lithium ions may be intercalated into the silicon-based active material particles when a ratio of an average particle diameter of the silicon-based active material to an average particle diameter of the artificial graphite particles in the form of a secondary particle is controlled to a specific range, a degradation rate of the silicon-based active material may be reduced, and thus, particle breakage of the silicon-based active material may be suppressed. Furthermore, it is possible to minimize a problem in which impregnability of the negative electrode is reduced due to clogging of pores of the negative electrode by byproducts generated as a solid electrolyte interphase (SEI) film formed on a surface of the silicon-based active material is destroyed. As a result, degradation in life performance, capacity performance, and rapid charging performance of a battery may be prevented.

Accordingly, the negative electrode according to the present invention may simultaneously achieve an effect of increasing capacity of the battery due to the use of the silicon-based active material and effects of reducing battery resistance and improving rapid charging performance due to the control of the circularity of the primary particles and the ratio of the average particle diameter of the silicon-based active material to the average particle diameter of the artificial graphite particles in the form of a secondary particle.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

An average particle diameter ($D_{50}$) in the present specification may be defined as a particle diameter at a cumulative volume of 50% in a particle size distribution curve of particles. The average particle diameter ($D_{50}$), for example, may be measured by using a laser diffraction method. The laser diffraction method may generally measure a particle diameter ranging from a submicron level to a few mm and may obtain highly repeatable and high-resolution results.

The expression 'primary particle' in the present specification means a single particle, that is, one particle, and the expression 'secondary particle' means an aggregate in which a plurality of primary particles are aggregated by an intentional assembly or bonding process.

Hereinafter, the present invention will be described in detail.

### Negative Electrode

The present invention relates to a negative electrode, and more particularly, to a negative electrode active material for a lithium secondary battery.

Specifically, the negative electrode according to the present invention is characterized in that it includes a current collector; and a negative electrode active material layer disposed on at least one surface of the current collector, wherein the negative electrode active material layer includes a carbon-based active material and a silicon-based active material, the carbon-based active material includes artificial graphite particles in a form of a secondary particle in which a plurality of primary particles are aggregated, the primary particles have a circularity of 0.60 to 0.78, and a ratio of an average particle diameter ($D_{50}$) of the silicon-based active material to an average particle diameter ($D_{50}$) of the artificial graphite particles in the form of a secondary particle is in a range of 0.4 to 1.

A current collector generally used in the art may be used without limitation as the current collector, and, for example, the current collector is not particularly limited so long as it has high conductivity without causing chemical changes in the lithium secondary battery. For example, the negative electrode collector may include at least one selected from copper, stainless steel, aluminum, nickel, titanium, fired carbon, and an aluminum-cadmium alloy, preferably, copper.

The current collector may have fine surface roughness to improve bonding strength with the negative electrode active material, and the current collector may be used in various shapes such as a film, a sheet, a foil, a net, a porous body, a foam body, a non-woven fabric body, and the like.

The negative electrode collector generally may have a thickness of 3 $\mu m$ to 500 $\mu m$.

The negative electrode active material layer is disposed on at least one surface of the negative electrode collector. Specifically, the negative electrode active material layer may be disposed on one surface or both surfaces of the negative electrode collector.

The negative electrode active material layer includes a negative electrode active material.

The negative electrode active material includes a carbon-based active material and a silicon-based active material.

The carbon-based active material and the silicon-based active material may each be in a form of a particle.

The carbon-based active material includes artificial graphite particles in a form of a secondary particle in which a plurality of primary particles are aggregated.

The silicon-based active material has an advantage of having higher capacity and higher energy density than a carbon-based active material such as graphite, but it has a disadvantage of exhibiting a large volume change of the active material during charge and discharge. Since such volume expansion and contraction of the silicon-based active material cause disconnection of conductive connections within the negative electrode, it causes increased resistance and reduced life performance. Also, a solid electrolyte interphase (SEI) film of the negative electrode, which is formed during a formation process of the lithium secondary battery, may be broken by the volume change of the silicon-based active material, and since this promotes a side reaction of an electrolyte to cause problems such as an increase in resistance due to an increase in thickness of the SEI film and depletion of the electrolyte, performance in terms of life performance and storage characteristics may ultimately be degraded.

In order to address the above problems, methods of using carbon-based active materials in combination have been studied, but additional problems exist, such as formation of a non-uniform film due to particle breakage caused by various factors, such as circularity of the particles constituting the carbon-based active material, a difference in mechanical strength between the carbon-based active material and the silicon-based active material, and average particle diameter ratio and content ratio of the silicon-based active material to the carbon-based active material, and degradation of cycle life characteristics due to the side reaction of the electrolyte.

The present invention has addressed the above problems by designing the primary particles to have a circularity within a specific range when the negative electrode active material includes a silicon-based active material and a carbon-based active material including artificial graphite particles in the form of a secondary particle in which a plurality of primary particles are aggregated.

The artificial graphite may be in the form of a secondary particle in which a plurality of primary particles are aggregated.

The secondary particle refers to a particle formed by aggregation of a plurality, for example, tens to hundreds of primary particles. In a case in which the artificial graphite particles are in the form of a secondary particle, voids may be formed in the artificial graphite particles, wherein the voids may be empty spaces formed between the primary particles and may be amorphous, and two or more thereof may be present.

The carbon-based active material including the artificial graphite particles in the form of a secondary particle has an advantage that since lithium ions may move smoothly through voids formed between the secondary particles, an electrochemical reaction of the lithium ions is promoted and current conductivity is improved, and thus, charge and discharge rates may be increased.

The primary particles constituting the artificial graphite particle in the form of a secondary particle may have a circularity of 0.60 to 0.78. When the negative electrode active material including the silicon-based active material and the carbon-based active material including artificial graphite particles in the form of a secondary particle in which a plurality of primary particles are aggregated is used, in a case in which the primary particles satisfy the above range, it is desirable in that the carbon-based active material is less likely to be broken during a rolling process in a negative electrode preparation process, lithium-ion migration pathways is secured within the secondary particles, and a conductive network with the silicon-based active material may be maintained.

Specifically, in a case in which the circularity of the primary particles is less than 0.60, since breakage of a carbon coating on a surface of the artificial graphite in the form of a secondary particle may occur due to silicon having relatively high particle strength during an additional rolling process due to low tap density and tortuosity, a Brunauer-Emmett-Teller (BET) specific surface area may increase. If the BET specific surface area increases, since a side reaction between the electrolyte and a region where the carbon coating of the artificial graphite is broken is increased, a film may be excessively formed on a surface of the electrode, and this may reduce porosity at an upper end of the electrode, making it difficult for the lithium ions to migrate to a lower end of the electrode and leading to a problem in which charge and discharge are concentrated on the silicon material located at the upper end of the electrode. As a result, expansion and contraction of the silicon-based active material present at the upper end of the electrode may be intensified. If this process is repeated, since the silicon-based active material located at an upper end portion of the electrode may be in direct contact with the electrolyte to cause an additional side reaction, a portion of a surface of the silicon-based active material may become electrochemically inactive and irreversible fixation of the lithium ions on the surface of the silicon-based active material may lead to a decrease in capacity of the battery due to decomposition of the electrolyte and a reduction in active silicon material, as well as a decrease in cycle life and an increase in battery resistance due to accelerated degradation of the upper end portion of the electrode caused by degradation of the silicon-based active material located at the upper end portion of the electrode.

In contrast, in a case in which the circularity of the primary particles is greater than 0.78, the breakage caused by the silicon-based active material particles during the rolling process is small, but a degree to which an edge plane of graphite is exposed may increase due to the high circularity. The edge plane of the graphite corresponds to an end portion of a graphite crystal structure, wherein it has a greater number of activated bonds than an internal basal plane. Since lithium-ion intercalation into graphite occurs through the edge plane rather than the basal plane, a higher edge/basal ratio provides a morphology advantageous for rapid charging. However, if the edge/basal ratio becomes excessively high due to the high circularity of the primary particles, the graphite may easily react not only with lithium ions but also with an electrolyte solvent or a lithium salt. Specifically, a side reaction with the electrolyte may occur at the edge plane of the graphite during charging to cause electrochemical decomposition of the electrolyte. A thick and unstable film formed through the electrochemical decomposition may lead to performance degradation and shortened lifetime of the battery.

Also, in the case that the circularity of the primary particles is greater than 0.78, the tortuosity may also increase. Tortuosity is an index indicating how tortuous a path is that lithium ions must traverse when passing through an electrode. For example, a lower tortuosity value means that there are fewer factors hindering transport of lithium ions. If the circularity of the particles is high, since a contact area between the primary particles increases and a spacing between the primary particles within the secondary particle is relatively reduced, a diffusion path of lithium ions is increased. As a result, since the overall tortuosity of the electrode increases, a structure is formed in which lithium ions have difficulty diffusing toward the lower end of the electrode. If the lithium-ion diffusion path is hindered, an increase in side reaction due to the accelerated degradation of the upper end portion of the electrode may lead to a decrease in capacity and an increase in resistance of the battery.

In the present invention, the circularity of the primary particles may be 0.60 or more, 0.62 or more, 0.64, or 0.66 or more. The circularity of the primary particles may be 0.78 or less, 0.76 or less, 0.74 or less, or 0.72 or less.

More specifically, the circularity of the primary particles may be in a range of 0.60 to 0.78, specifically 0.62 to 0.76, more specifically 0.64 to 0.74, and even more specifically 0.66 to 0.72. When the circularity of the primary particles satisfies the above range, the side reaction with the electrolyte is reduced, an effect of reducing battery resistance may be achieved while preventing a reduction in discharge capacity, and cycle life and rapid charge performance may be simultaneously improved.

The circularity may be measured by an image analysis method using an optical microscope (Keyence VHX-7000) in reflection mode with ring illumination. Specifically, 4 mg of the primary particles are dispersed in 2 ml of N-methyl-2-pyrrolidone (NMP), followed by sonication for 1 minute. Thereafter, the solution is dropped onto a slide glass and covered with a cover glass to prepare a sample. When the sample is placed on a stage of the optical microscope and then focused, and the magnification is fixed at $300\times$, images of about 100 to 200 particles in the corresponding area may be obtained. Furthermore, the circularity of each particle may be calculated by using an automatic area measurement function in a software of the corresponding apparatus, and the circularity of the primary particles may be quantified by averaging the calculated values. The circularity of each particle is calculated by Equation 1 below.

$$[\text{Equation 1}]$$

$$\text{Circularity} = 4\pi A/P^2$$

(P: perimeter of particle boundary, A: area of particle)

Effects of improving life characteristics and suppressing an increase in battery resistance, which may be achieved by designing the circularity of the primary particles to satisfy the above-described range, may not be exhibited when the carbon-based active material is used alone. That is, the effects of the present invention achieved by controlling a circularity value of the primary particles may be exhibited when the negative electrode active material includes both the carbon-based active material and the silicon-based active material.

In the present invention, a ratio of an average particle diameter ($D_{50}$) of the silicon-based active material to an average particle diameter ($D_{50}$) of the artificial graphite particles in the form of a secondary particle satisfies a range of 0.4 to 1. When the negative electrode active material including the silicon-based active material and the carbon-based active material including artificial graphite particles in the form of a secondary particle in which a plurality of primary particles are aggregated is used, it is desirable in that both capacity characteristics and life characteristics of a lithium secondary battery finally prepared may be secured when the ratio of the average particle diameter ($D_{50}$) of the silicon-based active material to the average particle diameter ($D_{50}$) of the artificial graphite particles in the form of a secondary particle satisfies the above range.

Specifically, in a case in which the ratio of the average particle diameter ($D_{50}$) of the silicon-based active material to the average particle diameter ($D_{50}$) of the artificial graphite particles in the form of a secondary particle is less than 0.4, since a specific surface area of the silicon-based active material increases, an amount of lithium used as a component of an SEI film formed on the surface of the silicon-based active material is increased. Also, the SEI film formed on the surface of the silicon-based active material is easily destroyed due to volume expansion of the silicon-based active material during battery operation, and byproducts of the destroyed SEI film may deteriorate electrolyte impregnability of the negative electrode by blocking pores of the negative electrode. As a result, capacity performance and rapid charging performance of the battery may be degraded. In contrast, in a case in which the ratio of the average particle diameter ($D_{50}$) of the silicon-based active material to the average particle diameter ($D_{50}$) of the artificial graphite particles in the form of a secondary particle is greater than 1, degradation and particle breakage of the silicon-based active material may be intensified due to a large difference in degree of volume expansion between an interior and a surface portion of the silicon-based active material particles. Specifically, in a case in which the silicon-based active material and the carbon-based active material are used in combination, since a lithium intercalation potential of the silicon-based active material is higher than a lithium intercalation potential of the carbon-based active material, a reaction in which lithium ions are intercalated into the surface portion of the silicon-based active material particles occurs preferentially. However, since energy required for the lithium ions to diffuse into the interior of the silicon-based active material particles increases as the average particle diameter of the silicon-based active material increases, a reaction in which lithium ions are intercalated into the carbon-based active material occurs preferentially over a reaction in which lithium ions diffuse into the interior of the silicon-based active material particles. That is, a situation occurs in which lithium ions are not intercalated into the interior of the silicon-based active material particles. If intercalation/deintercalation reactions of the lithium ions occur only at the surface portion of the silicon-based active material particles as described above, a particle breakage problem occurs due to the accelerated degradation rate of the silicon-based active material.

The ratio of the average particle diameter ($D_{50}$) of the silicon-based active material to the average particle diameter ($D_{50}$) of the artificial graphite particles in the form of a secondary particle may specifically be in a range of 0.40 to 0.95, more specifically 0.45 to 0.90, and even more specifically 0.5 to 0.8. In a case in which the ratio of the average particle diameter ($D_{50}$) of the silicon-based active material to the average particle diameter ($D_{50}$) of the artificial graphite particles in the form of a secondary particle satisfies the above range, since occurrence of the problem of irreversible loss of available lithium and the particle breakage problem of the silicon-based active material described above may be suppressed, the capacity and life performance of the battery are excellent.

Also, a ratio of the average particle diameter of the silicon-based active material to an average particle diameter of the primary particles in the artificial graphite particles in the form of a secondary particle may be in a range of 0.65 to 1.15, specifically 0.70 to 1.10, more specifically 0.75 to 1.10, and even more specifically 0.80 to 1.05. In a case in which the above range is satisfied, since a difference in degradation rate between the carbon-based active material and the silicon-based active material may be minimized by preventing an excessive increase in migration path of lithium ions within the primary particles relative to the silicon-based active material, the life performance may be improved.

In the present invention, the average particle diameter ($D_{50}$) of the primary particles may be in a range of 1 $\mu$m to 30 $\mu$m, specifically 3 $\mu$m to 25 $\mu$m, more specifically 5 $\mu$m to 18 $\mu$m, and even more specifically 7 $\mu$m to 13 $\mu$m. In a case in which the above range is satisfied, since density of the primary particles in the artificial graphite particles in the form of a secondary particle is not excessively small, tap density is excellent. Since a degree of thickness change is not large in a rolling process to achieve a desired electrode thickness when the tap density is excellent, the occurrence of particle breakage may be suppressed.

The artificial graphite in the form of a secondary particle may be prepared by a method in which artificial graphite particles in a form of a primary particle are mixed with a binder material (for example, pitch), spheroidized, and heat-treated to aggregate the artificial graphite particles in the form of a primary particle into secondary particles. Also, in a case in which the artificial graphite particles are in the form of a secondary particle, the artificial graphite particles may be prepared by mixing a carbon precursor and a binder material, performing spheroidization and granulation processes to prepare an intermediate in the form of a secondary particle, and graphitizing the intermediate by performing a heat treatment at a temperature of 3,000°C or higher. In this case, the carbon precursor may be coal-based heavy oil, petroleum-based heavy oil, tar, pitch, or coke, and may specifically be at least one selected from the group consisting of needle coke, mosaic coke, and coal tar pitch.

The carbon-based active material may further include an amorphous carbon coating layer disposed on a surface of the artificial graphite particle in the form of a secondary particle. The amorphous carbon coating layer may contribute to improve structural stability of the artificial graphite particle and prevent a side reaction between the negative electrode active material and an electrolyte solution.

The amorphous carbon coating layer may be formed in an amount of 0.1 wt% to 10 wt%, preferably, 1 wt% to 5 wt% based on a total weight of the carbon-based active material. The presence of the amorphous carbon coating layer may improve the structural stability of the carbon-based active material, but, since there is a concern that excessive formation of the amorphous carbon coating layer causes degradation of high-temperature storage performance and a reduction in initial efficiency due to an increase in the specific surface area during rolling of the negative electrode, it is desirable to form the carbon coating layer within the above-described amount range.

The amorphous carbon coating layer may be formed by performing a heat treatment, after providing a carbon coating layer precursor to the artificial graphite particles.

The carbon coating layer precursor may include at least one selected from polymer resin and pitch. Specifically, the polymer resin may include at least one selected from the group consisting of sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, and polyvinyl chloride. The pitch may include at least one selected from the group consisting of coal-based pitch, petroleum-based pitch, and mesophase pitch. A heat treatment process for forming the amorphous carbon coating layer may be performed at 1,000°C to 1,500°C in terms of promoting uniform formation of the amorphous carbon coating layer.

In the present invention, the average particle diameter ($D_{50}$) of the artificial graphite particles in the form of a secondary particle may be in a range of 5 $\mu$m to 60 $\mu$m, specifically 6 $\mu$m to 35 $\mu$m, more specifically 8 $\mu$m to 20 $\mu$m, and even more specifically 9 $\mu$m to 14 $\mu$m.

In the present invention, circularity of the artificial graphite particles in the form of a secondary particle may be in a range of 0.30 to 0.95, specifically 0.5 to 0.9, more specifically 0.60 to 0.85, and even more specifically 0.65 to 0.85.

In the present invention, a BET specific surface area of the carbon-based active material may be in a range of 0.05 $m^2$/g to 100 $m^2$/g, specifically 0.2 $m^2$/g to 10 $m^2$/g, and more specifically 0.5 $m^2$/g to 1.5 $m^2$/g. When the BET specific surface area of the carbon-based active material satisfies the above range, non-uniform reaction and side reaction with the electrolyte on a surface of the negative electrode may be prevented.

The BET specific surface area may be measured using a BEL Sorption instrument (BEL Japan, Inc.).

In the present invention, tap density of the carbon-based active material may be in a range of 0.3 g/cc to 2.0 g/cc, specifically 0.7 g/cc to 1.3 g/cc, and more specifically 0.95 g/cc to 1.10 g/cc. When the tap density of the carbon-based active material of the present invention satisfies the above range, since the space between the particles is reduced during granulation of the secondary particles to increase a solid content of a slurry, it is desirable in that it has an advantage in mixing and coating processability.

In the present invention, the silicon-based active material may include a silicon-based negative electrode active material such as silicon (Si), a Si-Me alloy (where, Me is at least one selected from the group consisting of aluminum (Al), tin (Sn), magnesium (Mg), copper (Cu), iron (Fe), lead (Pb), zinc (Zn), manganese (Mn), chromium (Cr), titanium (Ti), and nickel (Ni)), a silicon oxide ($SiO_x$, 0<x<2), and a silicon-carbon composite (Si/C composite), and most preferably, may include at least one selected from the group consisting of silicon (Si), a silicon oxide ($SiO_x$, 0<x<2), and a silicon-carbon composite (Si/C composite).

In the present invention, the average particle diameter ($D_{50}$) of the silicon-based active material may be in a range of 0.5 $\mu$m to 60 $\mu$m, specifically 1 $\mu$m to 35 $\mu$m, more specifically 3 $\mu$m to 20 $\mu$m, even more specifically 5 $\mu$m to 10 $\mu$m, and still more specifically 7 $\mu$m to 9 $\mu$m.

In the present invention, the carbon-based active material and the silicon-based active material may be included in a weight ratio of 50:50 to 99:1, specifically 70:30 to 97:3, more specifically 80:20 to 97:3, and even more specifically 85:15 to 97:3. When the weight ratio satisfies the above range, the capacity of the lithium secondary battery may be effectively improved while minimizing side reactions due to the volume expansion of the silicon-based active material.

The negative electrode active material may be included in an amount of 60 wt% to 99 wt%, preferably, 75 wt% to 98 wt% in the negative electrode active material layer. In a case in which the amount of the negative electrode active material is within the above range, a desired capacity of the battery may be achieved.

The negative electrode active material layer may further include a binder, a conductive agent, and/or a thickener in addition to the above-described negative electrode active material.

The binder is a component that assists in the binding between the active material and/or the current collector, wherein the binder may commonly be included in an amount of 0.1 wt% to 30 wt%, preferably, 1 wt% to 10 wt% in the negative electrode active material layer.

The binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber, and a fluorine rubber, preferably, at least one selected from polyvinylidene fluoride and a styrene-butadiene rubber.

Any thickener used in a conventional lithium secondary battery may be used as the thickener, and an example thereof is carboxymethyl cellulose (CMC).

The conductive agent is a component for further improving conductivity of the negative electrode active material, wherein the conductive agent may be included in an amount of 0.1 wt% to 30 wt%, preferably, 1 wt% to 10 wt% in the negative electrode active material layer.

Any negative electrode conductive agent may be used without particular limitation so long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

A thickness of the negative electrode active material layer may be in a range of 10 $\mu$m to 300 $\mu$m, specifically, 50 $\mu$m to 200 $\mu$m, but is not limited thereto.

The negative electrode active material layer may be prepared by applying a negative electrode slurry, which is prepared by adding the negative electrode active material and, optionally, the binder, the thickener, and/or the conductive agent to a solvent, onto the negative electrode collector and rolling and drying the coated negative electrode collector. In this case, the solvent may include water or an organic solvent such as NMP (N-methyl-2-pyrrolidone), and may more specifically be water.

After preparing a negative electrode slurry by mixing the negative electrode active material with optionally the binder and the conductive agent in a solvent such as NMP (N-methyl-2-pyrrolidone) or water, the negative electrode may be prepared by coating the negative electrode collector with the negative electrode slurry, and drying and rolling the coated negative electrode collector.

Since the negative electrode according to the present invention includes the negative electrode active material in which loss of the carbon-based active material is prevented and mobility of lithium ions is secured by controlling the circularity of the primary particles constituting the carbon-based active material and the amount of the silicon-based active material, it has superior capacity characteristics, rapid charging performance, and cycle life characteristics compared to a conventional negative electrode and a resistance increase rate of the battery is controlled.

A BET specific surface area of the negative electrode may be in a range of 0.1 m²/g to 30 m²/g, specifically 0.5 m²/g to 10 m²/g, more specifically 1 m²/g to 6 m²/g, even more specifically 2 m²/g to 4 m²/g, and still more specifically 2.1 m²/g to 3.0 m²/g. In a case in which the BET specific surface area of the negative electrode satisfies the above range, it is desirable in that a breakage phenomenon of the artificial graphite particles in the form of a secondary particle may be prevented and the mobility of lithium ions may be maximized.

Porosity of the negative electrode may be in a range of 15% to 40%, specifically 25% to 35%.

The porosity of the negative electrode may be calculated by Equation 2 below.

Porosity (%) = {1-(electrode density of the negative electrode/true density of the negative electrode)} $\times$ 100 [Equation 2]

In Equation 2, the true density of the negative electrode is calculated according to a mixing ratio in the negative electrode active material layer using the true densities of the negative electrode active material, the conductive agent, and the binder included in the negative electrode active material layer, and the electrode density of the negative electrode is density of the negative electrode active material layer measured by sampling the negative electrode to a predetermined size.

The true densities of the negative electrode active material, the conductive agent, and the binder are values measured using a gas pycnometer (Quantachrone Corporation).

**Lithium Secondary Battery**

Next, a lithium secondary battery according to the present invention will be described.

The lithium secondary battery according to the present invention includes a negative electrode, a positive electrode, and an electrolyte, and may further include a separator, if necessary. In this case, since the negative electrode is the same as the above-described negative electrode according to the present invention, a detailed description thereof will be omitted, and the remaining components other than the negative electrode will be described below.

## Positive Electrode

A positive electrode according to the present invention includes a positive electrode material mixture layer including a positive electrode active material, a positive electrode conductive agent, and a positive electrode binder. The positive electrode may be prepared by a method in which a positive electrode collector is coated with a positive electrode slurry including the positive electrode active material, the positive electrode binder, the positive electrode conductive agent, and a solvent, and then rolled to form a positive electrode material mixture layer.

The positive electrode collector is not particularly limited so long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), etc.), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1-}Co_{q1}Mn_{r1})O_4$ (where $0<p1<2$, $0<q1<2$, $0<r1<2$, and $p1+q1+r1=2$), etc.), or lithium-nickel-cobalt-transition metal (M) oxide (e.g., $Li(Ni_{p2}Co_{q2}Mn_{r2}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein $0<p2<1$, $0<q2<1$, $0<r2<1$, $0<S2<1$, and $p2+q2+r2+S2=1$), etc.), and any one thereof or a compound of two or more thereof may be included.

Specifically, the positive electrode active material may include a lithium transition metal oxide represented by [Formula 1] below.

$$[\text{Formula 1}] \qquad Li_xNi_aCo_bM^1_cM^2_dO_2$$

In Formula 1, $M^1$ is at least one selected from Mn and Al, and may be preferably Mn or a combination of Mn and Al in terms of durability.

$M^2$ may be at least one selected from the group consisting of zirconium (Zr), yttrium (Y), boron (B), tungsten (W), magnesium (Mg), Cerium (Ce), hafnium (Hf), tantalum (Ta), lanthanum (La), titanium (Ti), strontium (Sr), barium (Ba), fluorine (F), phosphorus (P), and sulfur (S).

x represents an atomic fraction of lithium in the lithium transition metal oxide, wherein x may satisfy $0.90 \leq x \leq 1.1$, may preferably satisfy $0.95 \leq x \leq 1.08$, and may more preferably satisfy $1.0 \leq x \leq 1.08$.

a represents an atomic fraction of nickel among metallic elements excluding lithium in the lithium transition metal oxide, wherein a may satisfy $0.50 \leq a < 1.0$, $0.60 \leq a \leq 0.95$, $0.65 \leq a \leq 0.95$, or $0.80 \leq a \leq 0.95$. In a case in which the amount of the nickel satisfies the above range, high-capacity characteristics may be achieved.

b represents an atomic fraction of cobalt among the metallic elements excluding lithium in the lithium transition metal oxide, wherein b may satisfy $0<b<0.5$, $0<b<0.4$, or $0.01 \leq b \leq 0.3$.

c represents an atomic fraction of $M^1$ among the metallic elements excluding lithium in the lithium transition metal oxide, wherein c may satisfy $0<c<0.5$, $0<c<0.4$, or $0.01 \leq c \leq 0.3$.

d represents an atomic fraction of $M^2$ among the metallic elements excluding lithium in the lithium transition metal oxide, wherein d may satisfy $0 \leq d \leq 0.1$ or $0 \leq d \leq 0.05$.

The positive electrode active material may be included in an amount of 60 wt% to 99 wt%, preferably 70 wt% to 99 wt%, and more preferably 80 wt% to 98 wt% based on a total weight of the positive electrode material mixture layer.

The positive electrode binder is a component that assists in the binding between the positive electrode active material and the positive electrode conductive agent and in the binding with the current collector.

Examples of the positive electrode binder may be polyvinylidene fluoride, polyvinyl alcohol, carboxymethyl cellulose (CMC), starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, or various copolymers.

The positive electrode binder may commonly be included in an amount of 1 wt% to 20 wt%, preferably 1 wt% to 15 wt%, and more preferably 1 wt% to 10 wt% based on the total weight of the positive electrode material mixture layer.

The positive electrode conductive agent is a component for further improving conductivity of the positive electrode active material, wherein it is not particularly limited as long as it has conductivity without causing chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The positive electrode conductive agent may commonly be included in an amount of 1 wt% to 20 wt%, preferably 1 wt% to 15 wt%, and more preferably 1 wt% to 10 wt% based on the total weight of the positive electrode material mixture layer.

The solvent for a positive electrode slurry may include an organic solvent, such as dimethyl sulfoxide (DMSO), isopropyl alcohol, N-methylpyrrolidone (NMP), and acetone, and may be used in an amount such that desirable viscosity is obtained when the positive electrode active material, the positive electrode binder and the positive electrode conductive agent are included. For example, the solvent may be included in an amount such that a concentration of a solid content including the positive electrode active material as well as optionally the positive electrode binder and the positive electrode conductive agent is in a range of 50 wt% to 95 wt%, preferably 70 wt% to 95 wt%, and more preferably 70 wt% to 90 wt%.

### Electrolyte

As the electrolyte used in the present invention, various electrolytes usable in a lithium secondary battery, for example, an organic liquid electrolyte, an inorganic liquid electrolyte, a solid polymer electrolyte, a gel-type polymer electrolyte, a solid inorganic electrolyte, or a molten-type inorganic electrolyte may be used, and a type thereof is not particularly limited.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or a combination thereof may be used as the lithium salt. The lithium salt may be used in a concentration range of 0.1 M to 5.0 M, preferably 0.1 M to 3.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, an additive may be further included in the electrolyte in addition to the above components. For example, the electrolyte may include at least one additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

Examples of the cyclic carbonate-based compound may include vinylene carbonate (VC) or vinyl ethylene carbonate.

Examples of the halogen-substituted carbonate-based compound may include fluoroethylene carbonate (FEC).

Examples of the sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

Examples of the sulfate-based compound may include ethylene sulfate (Esa), trimethylene sulfate (TMS), or methyl trimethylene sulfate (MTMS).

Examples of the phosphate-based compound may include at least one compound selected from the group consisting of lithium difluoro (bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

Examples of the borate-based compound may be tetraphenylborate, lithium oxalyldifluoroborate (LiODFB), and lithium bis (oxalato) borate (LiB(C$_2$O$_4$)$_2$, LiBOB).

Examples of the nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

Examples of the benzene-based compound may include fluorobenzene, examples of the amine-based compound may include triethanolamine or ethylenediamine, and examples of the silane-based compound may include tetravinylsilane.

The lithium salt-based compound is a compound different from the lithium salt included in the non-aqueous electrolyte, wherein the lithium salt-based compound may include lithium difluorophosphate (LiDFP), LiPO$_2$F$_2$, or LiBF$_4$.

The additive may be included in an amount of 0.1 wt% to 10 wt%, preferably 0.1 wt% to 5 wt% based on a total weight of the electrolyte.

## Separator

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

The lithium secondary battery according to the present invention as described above may be used to prepare a battery pack. The battery pack includes an assembly in which the lithium secondary batteries according to the present invention are electrically connected, and a pack housing accommodating the same, and the pack housing may include bus bars for electrically connecting the lithium secondary batteries, a cooling unit, external terminals, and the like. The battery pack may be mounted in a vehicle. The vehicle may be, for example, an electric vehicle, a hybrid vehicle, or a plug-in hybrid vehicle. The vehicle includes a four-wheeled vehicle or a two-wheeled vehicle. Particularly, since the lithium secondary battery according to the present invention has high energy density and excellent rapid charging performance, it may be usefully employed as a battery for an electric vehicle.

Hereinafter, the present invention will be described in detail, according to specific examples. However, the following examples are merely provided to allow for a more clearly detailed understanding of the present invention, rather than to limit the scope of the present invention.

## Examples and Comparative Examples

### Example 1

A negative electrode slurry was prepared by adding a negative electrode active material: a conductive agent (carbon black): a binder (SBR-CMC) to distilled water at a weight ratio of 95.6:1.0:3.4.

The negative electrode active material was a mixture of a carbon-based active material and a silicon-based active material in a weight ratio of 90:10. The carbon-based active material was artificial graphite particles in the form of a secondary particle in which a plurality of primary particles were aggregated, having an amorphous carbon coating layer formed on surfaces thereof. The primary particles had an average particle diameter (D$_{50}$) of 9 $\mu$m and a circularity of 0.75. Also, the carbon coating layer was included in an amount of 2.5 wt% based on the carbon-based active material. Furthermore, the artificial graphite particles had an average particle diameter (D$_{50}$) of 12 $\mu$m, a circularity of 0.82, and a specific surface area of 0.8 m$^2$/g. In addition, the silicon-based active material was Si/C, and had an average particle diameter (D$_{50}$) of 8 $\mu$m.

A negative electrode was prepared by applying the negative electrode slurry onto a copper current collector, followed by drying, rolling, and vacuum drying to form a negative electrode active material layer (thickness: 70 $\mu$m). Porosity of the negative electrode was 28%.

### Example 2

A negative electrode was prepared in the same manner as in Example 1 except that as a carbon-based active material, artificial graphite particles in the form of a secondary particle, in which a plurality of primary particles were aggregated, were used, wherein the primary particles had an average particle diameter ($D_{50}$) of 7.9 $\mu$m and a circularity of 0.65, and the artificial graphite particles had an average particle diameter ($D_{50}$) of 10.5 $\mu$m, a circularity of 0.76, and a specific surface area of 0.9 m$^2$/g. Porosity of the negative electrode was 28%.

**Comparative Example 1**

A negative electrode was prepared in the same manner as in Example 1 except that as a carbon-based active material, artificial graphite particles in the form of a secondary particle, in which a plurality of primary particles were aggregated, were used, wherein the primary particles had an average particle diameter ($D_{50}$) of 5 $\mu$m and a circularity of 0.57, and the artificial graphite particles had an average particle diameter ($D_{50}$) of 7.2 $\mu$m, a circularity of 0.63, and a specific surface area of 0.4 m$^2$/g. Porosity of the negative electrode was 28%.

**Comparative Example 2**

A negative electrode was prepared in the same manner as in Example 1 except that as a carbon-based active material, artificial graphite particles in the form of a secondary particle, in which a plurality of primary particles were aggregated, were used, wherein the primary particles had an average particle diameter ($D_{50}$) of 13.3 $\mu$m and a circularity of 0.91, and the artificial graphite particles had an average particle diameter ($D_{50}$) of 16.5 $\mu$m, a circularity of 0.89, and a specific surface area of 1.3 m$^2$/g. Porosity of the negative electrode was 28%.

**Comparative Example 3**

A negative electrode was prepared in the same manner as in Comparative Example 1 except that as a silicon-based active material, Si/C having an average particle diameter ($D_{50}$) of 6 $\mu$m was used. Porosity of the negative electrode was 28%.

**Comparative Example 4**

A negative electrode was prepared in the same manner as in Example 1 except that as a silicon-based active material, Si/C having an average particle diameter ($D_{50}$) of 14 $\mu$m was used. Porosity of the negative electrode was 28%.

**Comparative Example 5**

A negative electrode was prepared in the same manner as in Example 1 except that as a silicon-based active material, Si/C having an average particle diameter ($D_{50}$) of 3 $\mu$m was used. Porosity of the negative electrode was 28%.

[Table 1]

| | Carbon-based active material | | | | | | Silicon-based active material | Ratio of average particle diameter of silicon-based active material to average particle diameter of artificial graphite particles in the form of secondary particle | Negative electrode | |
| | Primary particles | | Artificial graphite particles (secondary particle) | | | | | | | |
| | Circularity | Average particle diameter (D$_{50}$)(μm) | Circularity | Average particle diameter (D$_{50}$)(μm) | Tap density (g/cc) | BET specific surface area (m²/g) | Average particle diameter (D$_{50}$)(μm) | | BET specific surface area (m²/g) | Tortuosity |
|---|---|---|---|---|---|---|---|---|---|---|
| Example 1 | 0.75 | 9 | 0.82 | 12 | 1.06 | 0.8 | 8 | 0.67 | 2.6 | 5.7 |
| Example 2 | 0.65 | 7.9 | 0.76 | 10.5 | 0.97 | 0.9 | 8 | 0.76 | 3.8 | 4.9 |
| Comparative Example 1 | 0.57 | 5 | 0.63 | 7.2 | 0.92 | 0.4 | 8 | 1.11 | 5.7 | 4.2 |
| Comparative Example 2 | 0.91 | 13.3 | 0.89 | 16.5 | 1.15 | 1.3 | 8 | 0.48 | 1.9 | 7.9 |
| Comparative Example 3 | 0.57 | 5 | 0.57 | 7.2 | 0.92 | 0.4 | 6 | 0.83 | 7.5 | 3.9 |
| Comparative Example 4 | 0.75 | 9 | 0.82 | 12 | 1.06 | 0.8 | 14 | 1.16 | 4.9 | 6.5 |
| Comparative Example 5 | 0.75 | 9 | 0.82 | 12 | 1.06 | 0.8 | 3 | 0.25 | 4.1 | 5.9 |

1) Circularity

The circularity was measured by an image analysis method using an optical microscope (Keyence VHX-7000) in reflection mode with ring illumination. Specifically, 4 mg of the particles included in each of the negative electrode active materials used in Examples 1 and 2 and Comparative Examples 1 to 5 were dispersed in 2 ml of N-methyl-2-pyrrolidone (NMP), followed by sonication for 1 minute. Thereafter, the solution was dropped onto a slide glass and covered with a cover glass to prepare a sample. Subsequently, when the sample was placed on a stage of the optical microscope and then focused, and the magnification was fixed at 300×, images of about 100 to 200 particles in the corresponding area may be obtained. The circularity of each particle was calculated by using an automatic area measurement function in a software of the optical microscope, and the corresponding values were averaged and are presented in Table 1 above.

[Equation 1]

$$\text{Circularity} = 4\pi A/P^2$$

(P: perimeter of particle boundary, A: area of particle)

2) Tap density

40 g of negative electrode active material powder included in each of Examples 1 and 2 and Comparative Examples 1 to 5 was placed in a container and tapped 1000 times to compact the powder, and volume and mass were then measured to calculate tip density. The tap densities calculated from the artificial graphite particles of Examples 1 and 2 and Comparative Examples 1 to 5 are presented in Table 1 above.

3) BET Specific Surface Area of the Negative Electrode

Specific surface areas of the negative electrodes of Examples 1 and 2 and Comparative Examples 1 to 5 were measured using a BEL Sorption instrument (BEL Japan Inc.) after punching 300 rolled electrodes using a 6$\varphi$-diameter electrode punch and placing the punched electrodes in a BET sample cell. The results measured for the carbon-based active materials of Examples 1 and 2 and Comparative Examples 1 to 5 and for the negative electrodes of Examples 1 and 2 and Comparative Examples 1 to 5 are presented in Table 1 above.

4) Tortuosity Evaluation

Using the negative electrodes of Examples 1 and 2 and Comparative Examples 1 to 5, an electrode assembly was prepared by disposing a separator between the two negative electrodes, the electrode assembly was placed in a battery case, an electrolyte solution (ethylene carbonate (EC) : ethyl methyl carbonate (EMC) = 3 : 7 v/v%) containing 1 M lithium salt ($LiPF_6$) was injected, and the battery case was aged for 12 hours to 24 hours to prepare a symmetric coin cell (Symmetric cell). Then, after a current having a frequency of 0.1 to 1,000,000 Hz and an amplitude of 10 Mv was applied to the prepared symmetric coin cell, electrode pore resistance was measured using a graph measured by electrochemical impedance spectroscopy (EIS) to calculate an average migration distance (Ls) of lithium ions within the negative electrode active material layer, and tortuosity (Ls /$L_0$) was calculated by dividing Ls by the thickness ($L_0$) of the negative electrode active material layer.
The tortuosity calculated by this method is presented in Table 1 above.

## Experimental Examples

### Experimental Example 1: Initial Efficiency and Discharge Capacity Evaluation

(Preparation of Coin Half-Cells)

An electrode assembly was prepared by disposing a separator between each of the negative electrodes of Examples 1 and 2 and Comparative Examples 1 to 5 and a lithium counter electrode, and after the electrode assembly was placed in a battery case, an electrolyte was injected to prepare a coin half-cell.

(Initial Efficiency and Discharge Capacity Evaluation)

The coin half-cells according to Examples 1 and 2 and Comparative Examples 1 to 5 were each charged at 0.1C to 0.005 V with a cut-off condition of 0.005C in a constant current-constant voltage (CCCV) mode at room temperature (25°C), and discharged at 0.1C to 1.5 V in a CC mode to measure discharge capacity and initial efficiency.
Measurement results are presented in Table 2 below.

### Experimental Example 2: Capacity Retention Evaluation

Coin half-cells were prepared in the same manner as in Experimental Example 1. Also, when the above charge and discharge were defined as one cycle, 300 cycles were performed at 25°C. Thereafter, discharge capacity after 300 cycles (capacity retention) was measured based on the discharge capacity after the first cycle being set to 100%, and the results thereof are presented in Table 2 below.

[Table 2]

| | Discharge capacity (mAh/g) | Initial efficiency (%) | Capacity retention after 300 cycles (%) |
|---|---|---|---|
| Example 1 | 525 | 89.5 | 84.3 |
| Example 2 | 523 | 88.9 | 81.1 |

(continued)

|  | Discharge capacity (mAh/g) | Initial efficiency (%) | Capacity retention after 300 cycles (%) |
|---|---|---|---|
| Comparative Example 1 | 519 | 87.2 | 75.2 |
| Comparative Example 2 | 521 | 88.1 | 79.3 |
| Comparative Example 3 | 516 | 85.9 | 76.7 |
| Comparative Example 4 | 518 | 87.4 | 76.2 |
| Comparative Example 5 | 520 | 87.6 | 77.1 |

Referring to Table 2, it may be understood that the coin half-cells according to Examples 1 and 2, in which the negative electrode active material satisfying the range of the circularity of the primary particles according to the present invention, including the carbon-based active material and the silicon-based active material, and having the ratio of the average particle diameter of the silicon-based active material to the average particle diameter of the artificial graphite particles in the form of a secondary particle satisfied the range of the present invention was used, had better discharge capacity, initial efficiency, and capacity retention after 300 cycles than the coin half-cells of Comparative Examples 1 to 3 which were outside the range of the circularity of the primary particles according to the present invention.

Also, it may be understood that the coin half-cells according to Examples 1 and 2 had better discharge capacity, initial efficiency, and capacity retention after 300 cycles than the coin half-cells of Comparative Examples 4 and 5 which satisfied the range of the circularity of the primary particles according to the present invention, but deviated from the ratio of the average particle diameter of the silicon-based active material to the average particle diameter of the artificial graphite particles in the form of a secondary particle according to the present invention.

**Reference Example**

**Reference Example 1**

A negative electrode was prepared in the same manner as in Example 1 except that a negative electrode active material was composed solely of the carbon-based active material without mixing the silicon-based active material.

**Reference Example 2**

A negative electrode was prepared in the same manner as in Example 2 except that a negative electrode active material was composed solely of the carbon-based active material without mixing the silicon-based active material.

**Reference Example 3**

A negative electrode was prepared in the same manner as in Comparative Example 1 except that a negative electrode active material was composed solely of the carbon-based active material without mixing the silicon-based active material.

**Reference Example 4**

A negative electrode was prepared in the same manner as in Comparative Example 2 except that a negative electrode active material was composed solely of the carbon-based active material without mixing the silicon-based active material.

**Reference Experimental Example 1: Initial Efficiency and Discharge Capacity Evaluation**

(Preparation of Coin Half-Cells)

An electrode assembly was prepared by disposing a separator between each of the negative electrodes prepared by Reference Examples 1 to 3 and a lithium counter electrode, and after the electrode assembly was placed in a battery case, an electrolyte was injected to prepare a coin half-cell.

(Initial Efficiency and Discharge Capacity Evaluation)

The coin half-cells according to Reference Examples 1 to 3 were each charged at 0.1C to 0.005 V with a cut-off condition of 0.005C in a CCCV mode at room temperature (25°C), and discharged at 0.1C to 1.5 V in a CC mode to measure discharge capacity and initial efficiency.

Measurement results are presented in Table 3 below.

**Reference Experimental Example 2: Capacity Retention Evaluation**

Coin half-cells were prepared in the same manner as in Reference Experimental Example 1. Also, when the above charge and discharge were defined as one cycle, 300 cycles were performed at 25°C. Thereafter, discharge capacity after 300 cycles (capacity retention) was measured based on the discharge capacity after the first cycle being set to 100%, and the results thereof are presented in Table 3 below.

[Table 3]

|  | Discharge capacity (mAh/g) | Initial efficiency (%) | Capacity retention after 300 cycles (%) |
|---|---|---|---|
| Reference Example 1 | 352 | 93.2 | 86.7 |
| Reference Example 2 | 349 | 93.6 | 84.9 |
| Reference Example 3 | 357 | 94.5 | 83.2 |
| Reference Example 4 | 345 | 91.8 | 88.5 |

Referring to Table 3, it may be confirmed that at least one of the discharge capacity, initial efficiency, and capacity retention after 300 cycles of Reference Example 1 was not better than those of Reference Examples 2 to 4 which were outside the circularity range of the present invention.

This indicates that even if the carbon-based active material including the artificial graphite particles in the form of a secondary particle, in which a plurality of primary particles included within the circularity range of the present invention were aggregated, was used as the negative electrode active material, an effect of improving initial efficiency and cycle life characteristics was not obtained when the carbon-based active material was not mixed with the silicon-based active material.

Thus, it may be clearly understood that the configuration of the circularity of the primary particles within a specific range according to the present invention may exhibit a significant effect only when the negative electrode active material includes not only the carbon-based active material but also the silicon-based active material.

**Claims**

1. A negative electrode comprising:

    a current collector; and
    a negative electrode active material layer disposed on at least one surface of the current collector,
    wherein the negative electrode active material layer comprises a carbon-based active material and a silicon-based active material,
    the carbon-based active material comprises artificial graphite particles in a form of a secondary particle in which a plurality of primary particles are aggregated,
    the primary particles have a circularity of 0.60 to 0.78, and
    a ratio of an average particle diameter ($D_{50}$) of the silicon-based active material to an average particle diameter ($D_{50}$) of the artificial graphite particles in the form of a secondary particle is in a range of 0.4 to 1.

2. The negative electrode of claim 1, wherein the primary particles have an average particle diameter ($D_{50}$) of 1 $\mu$m to 30 $\mu$m.

3. The negative electrode of claim 1, wherein the average particle diameter ($D_{50}$) of the artificial graphite particles in the form of a secondary particle is in a range of 5 $\mu$m to 60 $\mu$m.

4. The negative electrode of claim 1, wherein the artificial graphite particles in the form of a secondary particle have a circularity of 0.30 to 0.95.

5. The negative electrode of claim 1, wherein the carbon-based active material has a Brunauer-Emmett-Teller (BET) specific surface area of 0.05 m$^2$/g to 100 m$^2$/g.

6. The negative electrode of claim 1, wherein the carbon-based active material has a tap density of 0.3 g/cc to 2.0 g/cc.

7. The negative electrode of claim 1, wherein the average particle diameter of the silicon-based active material is in a range of 0.5 μm to 60 μm.

8. The negative electrode of claim 1, wherein the silicon-based active material comprises at least one selected from the group consisting of silicon (Si), a silicon oxide (SiO$_x$, 0<x<2), and a silicon-carbon composite.

9. The negative electrode of claim 1, wherein a weight ratio of the carbon-based active material to the silicon-based active material is in a range of 50:50 to 99:1.

10. The negative electrode of claim 1, wherein the negative electrode has a BET specific surface area of 0.1 m$^2$/g to 30 m$^2$/g.

11. A lithium secondary battery comprising:

the negative electrode of claim 1;
a positive electrode facing the negative electrode;
a separator disposed between the negative electrode and the positive electrode; and
a non-aqueous electrolyte.

## INTERNATIONAL SEARCH REPORT

| | International application No. |
|---|---|
| | **PCT/KR2025/017184** |

| A. | CLASSIFICATION OF SUBJECT MATTER |
|---|---|

**H01M 4/133**(2010.01)i; **H01M 4/134**(2010.01)i; **H01M 4/36**(2006.01)i; **H01M 4/587**(2010.01)i; **H01M 4/38**(2006.01)i; **H01M 4/48**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/133(2010.01); C01B 32/20(2017.01); H01M 10/052(2010.01); H01M 10/0525(2010.01); H01M 4/36(2006.01); H01M 4/38(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극(anode), 리튬 이차전지(lithium secondary battery), 탄소계 활물질(carbon-based active material), 인조흑연(artificial graphite), 실리콘계 활물질(silicon-based active material), 구형화도(sphericity)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2024-0098262 A (RESEARCH INSTITUTE OF INDUSTRIAL SCIENCE & TECHNOLOGY) 28 June 2024 (2024-06-28)<br>    claims 1, 22; paragraphs [0054], [0065], [0067], [0069], [0071], [0073], [0077]-[0082], [0106], [0107], [0150], [0160] | 1-11 |
| A | JP 2022-514807 A (NINGDE AMPEREX TECHNOLOGY LIMITED) 16 February 2022 (2022-02-16)<br>    abstract; claims 1-16 | 1-11 |
| A | KR 10-2019-0136382 A (SK INNOVATION CO., LTD.) 10 December 2019 (2019-12-10)<br>    abstract; claims 1-9 | 1-11 |
| A | KR 10-2022-0050828 A (LG ENERGY SOLUTION, LTD.) 25 April 2022 (2022-04-25)<br>    abstract; claims 1-9 | 1-11 |
| A | KR 10-2019-0052951 A (LG CHEM, LTD.) 17 May 2019 (2019-05-17)<br>    abstract; claims 1-15 | 1-11 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 January 2026** | **26 January 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br><br>**PCT/KR2025/017184** | | | |
|---|---|---|---|---|---|---|---|
| Patent document<br>cited in search report | | | Publication date<br>(day/month/year) | Patent family member(s) | | | Publication date<br>(day/month/year) |
| KR | 10-2024-0098262 | A | 28 June 2024 | WO | 2024-136052 | A1 | 27 June 2024 |
| JP | 2022-514807 | A | 16 February 2022 | EP | 4016673 | A1 | 22 June 2022 |
| | | | | EP | 4016673 | A4 | 12 October 2022 |
| | | | | JP | 7178488 | B2 | 25 November 2022 |
| | | | | KR | 10-2021-0074287 | A | 21 June 2021 |
| | | | | KR | 10-2668203 | B1 | 23 May 2024 |
| | | | | US | 12266786 | B2 | 01 April 2025 |
| | | | | US | 2021-0391567 | A1 | 16 December 2021 |
| | | | | WO | 2021-102846 | A1 | 03 June 2021 |
| KR | 10-2019-0136382 | A | 10 December 2019 | KR | 10-2586846 | B1 | 11 October 2023 |
| KR | 10-2022-0050828 | A | 25 April 2022 | CN | 116235307 | A | 06 June 2023 |
| | | | | CN | 120261479 | A | 04 July 2025 |
| | | | | EP | 4224562 | A1 | 09 August 2023 |
| | | | | EP | 4224562 | A4 | 06 November 2024 |
| | | | | EP | 4557398 | A2 | 21 May 2025 |
| | | | | EP | 4557398 | A3 | 06 August 2025 |
| | | | | JP | 2023-546420 | A | 02 November 2023 |
| | | | | JP | 7596526 | B2 | 09 December 2024 |
| | | | | KR | 10-2757389 | B1 | 21 January 2025 |
| | | | | US | 2023-0378439 | A1 | 23 November 2023 |
| | | | | WO | 2022-080995 | A1 | 21 April 2022 |
| KR | 10-2019-0052951 | A | 17 May 2019 | CN | 111316482 | A | 19 June 2020 |
| | | | | CN | 111316482 | B | 31 March 2023 |
| | | | | EP | 3694030 | A1 | 12 August 2020 |
| | | | | EP | 3694030 | A4 | 09 December 2020 |
| | | | | EP | 3694030 | B1 | 15 February 2023 |
| | | | | HU | E061214 | T2 | 28 May 2023 |
| | | | | JP | 2021-501976 | A | 21 January 2021 |
| | | | | JP | 2023-009168 | A | 19 January 2023 |
| | | | | JP | 7438596 | B2 | 27 February 2024 |
| | | | | KR | 10-2285980 | B1 | 04 August 2021 |
| | | | | US | 12355073 | B2 | 08 July 2025 |
| | | | | US | 2020-0343544 | A1 | 29 October 2020 |
| | | | | WO | 2019-093820 | A1 | 16 May 2019 |

Form PCT/ISA/210 (patent family annex) (July 2022)